# NOUVEAU FASCICULE DE BREVET EUROPEEN

(11) **EP 0 485 722 B2**
(45) Date de publication et mention de la décision concernant l'opposition: **29.11.2000**
(45) Mention de la délivrance du brevet: 26.01.1994
(21) Numéro de dépôt: 91116376.4
(22) Date de dépôt: 26.09.1991
(51) Int. Cl.: A23B 4/033, A23L 1/314

(54) **Procédé de préparation d'une viande aromatisée séchée**
Verfahren zur Herstellung von getrocknetem aromatisiertem Fleisch
Process to prepare a dried flavored meat

(30) Priorité: 07.11.1990 CH 353190
(43) Date de publication de la demande: 20.05.1992
(73) Titulaire: SOCIETE DES PRODUITS NESTLE S.A., 1800 Vevey (CH)
(72) Inventeur: Boesch, Hans, CH-8542 Wiesendangen (CH); Cornet, Paul-Emile, CH-1807 Blonay (CH); Heyland, Sven, CH-8534 Weiningen (CH)

(56) Documents cités:
- EP-A- 0 149 829
- EP-A- 0 313 895
- EP-A- 0 340 449
- DE-A- 3 206 587
- GB-A- 2 207 034
- US-A- 3 241 982
- US-A- 4 076 852
- US-A- 4 081 565
- Chemistry and technology, vol.2, 1981, pp. 283, 298-300

## Description

La présente invention a pour objet un procédé de préparation d'une viande aromatisée séchée pouvant notamment être utilisée dans des mets à reconstitution rapide.

Il est connu, par exemple par le brevet FR 1.538.975 de préparer une viande précuite déshydratée pouvant être rapidement reconstituée, par cuisson de la viande, mélange avec un sel et du glutamate de sodium, déshydratation et enrobage de la viande déshydratée avec une matière grasse. Le produit reconstitué possède toutefois un goût de viande peu prononcé.
Il est possible de renforcer ce goût de viande en ajoutant à la viande un agent aromatisant, obtenu par exemple par réaction thermique d'un acide aminé avec un sucre réducteur et une matière grasse.
Le produit ainsi obtenu présente toutefois un goût de viande peu caractéristique qui ne se conserve que peu de temps.

US4081565 et US4076852 concernent chacun un agent aromatisant capable de conférer le goût de la viande à un aliment auquel on l'ajoute. L'agent aromatisant de US4081565 est le produit de la réaction par traitement thermique d'un mélange d'un hydrolysat enzymatique de viande, de composés soufrés, d'acides aminés et de monosaccharides. L'agent aromatisant de US4076852 est le produit de la réaction par traitement thermique d'un mélange d'oeuf, d'une poudre de viande ou d'un hydrolysat enzymatique de viande, de composés soufrés, d'acides aminés et de monosaccharides.

DE3206587 concerne également un agent aromatisant capable de conférer le goût de la viande a un aliment auquel on l'ajoute. L'agent aromatisant de DE3206587 est le produit de la réaction par traitement thermique d'un mélange d'un extrait de viande, d'acides aminés, de renforçateurs d'arôme, d'hydrolysat de protéine, de sucre et de graisse animale.

J.G.Sharp: "Dehydrated meat", pages 45-54 concerne la préparation d'une viande déshydratée et plus particulièrement la préparation de la viande pour le séchage. La viande perd de l'eau et de la graisse durant la cuisson. Les liqueurs aqueuses contiennent une proportion appréciable de substances solubles de la viande qui peuvent être rajoutées à la viande cuite.

US3241982 décrit un procédé de séchage de la viande, dans lequel on cuit une viande dans une solution à au moins 0,5% d'un colloïde alimentaire, on sépare la viande du jus de cuisson et l'on sèche la viande enrobée d'un film du colloïde. La viande ainsi obtenue ne présente pas une surface dure car l'humidité résiduelle est répartie uniformément dans toute la viande, grâce au film de colloïde.

Lebensmittelchemie 44, page 57, 1990 et Z. Lebensm. Unters. Forsch. 186, pages 489-494 présentent chacun une analyse de composants aromatiques responsables de l'arôme de viande.

La présente invention a pour but de proposer un procédé de préparation d'une viande aromatisée se présentant sous forme séchée, possédant de bonnes propriétés organoleptiques et un goût de viande prononcé pouvant se conserver pendant une longue période.

A cet effet, selon le procédé de préparation d'une viande aromatisée séchée, objet de la présente invention, on cuit une viande, on en séparé le jus et la graisse, on prépare un mélange comprenant, en parties en poids, 7 à 15 parties de sucre réducteur et 1 à 7 parties d'au moins une substance contenant du soufre le sucre réducteur étant un monosaccharide, ou un acide galacturonique ou un mélange de ces composés, et la substance contenant du soufre étant la cystéine, la cystine, la méthionine ou la thiamine ou un mélange de ces substances, on fait réagir partiellement le mélange par traitement thermique, on ajoute 1-3 parties de mélange traité thermiquement à 10 parties de viande cuite et l'on sèche la viande aromatisée obtenue à 65-80°C, sous une pression de 10 à 30 mbar, pendant 4 à 8 heures, jusqu'à un taux de matière sèche de 96-99% en poids.

Le présent procédé est particulièrement remarquable par le fait que la réaction thermique est effectuée en deux étapes.
Ladite réaction est initiée lors du traitement thermique du mélange comprenant le sucre réducteur et la substance contenant du soufre, et entraîne un développement partiel des arômes à partir de ce mélange.
La réaction partielle est achevée lors du séchage de la viande aromatisée, au cours duquel les arômes pénètrent dans la viande et se fixent sur les fibres, en réagissant éventuellement avec les constituants de la viande. On obtient ainsi une viande aromatisée séchée possédant un goût de viande prononcé et caractéristique, qu'elle peut conserver pendant une longue période.

Un avantage de ce procédé est de permettre un développement total et une bonne fixation des arômes grâce à un traitement thermique plus doux que ceux utilisés habituellement.
Un autre avantage de ce procédé est de permettre les variation de goût de la viande aromatisée, en faisant varier les proportions des différents constituants.
Un autre avantage est de permettre l'obtention d'un goût de viande caractéristique en évitant l'emploi de jus de viande.

Le présent procédé peut être mis en oeuvre en semi-continu ou en continu.

Pour mettre en oeuvre le présent procédé, on peut utiliser tout type de viande, par exemple une viande de boeuf ou de volaille.
La viande peut, préalablement à la cuisson, avoir été débarrassée de tout ou partie de ses os et de sa peau. La viande peut aussi avoir été découpée, par exemple en morceaux de 1 à 10 kg, afin de permettre une cuisson plus rapide.

On peut cuire la viande pendant 40 à 120 minutes, à une température de 95-140°C, sous une pression de 1,3-1,8 bar.
Dans une forme particulière d'exécution du présent procédé, on cuit une viande de volaille pendant 40-60 minutes ou une viande de boeuf pendant 90-110 minutes, à une température de 120-125°C et sous une pression de 1,6-1,7 bar.

On peut ajouter à la viande, avant cuisson, de l'eau, de l'acide citrique et une composition antioxydante. Cette dernière peut se présenter, par exemple, sous forme d'une composition contenant, en % en poids, 1,5 à 2% d'antioxydant tel que, par exemple, le propylène glycol, le gallate de propyle ou d'octyle, le butylhydroxyanisol ou un mélange d'entre eux, 7,5 à 8% de graisse de volaille et 90-91% de jus de viande concentré présentant un taux de matière sèche de 38-40%.
Dans une forme d'exécution particulière du présent procédé, on ajoute avant cuisson à 100 parties en poids de viande de volaille, 15-20 parties en poids d'eau, 0,01 à 0,03 parties en poids d'acide citrique et 0,02 à 0,05 parties en poids de ladite composition antioxydante.
Dans une autre forme d'exécution particulière du présent procédé, on ajoute avant cuisson, à 100 parties en poids de viande de boeuf, 20 à 25 parties en poids d'eau, 0,01 à 0,02 parties en poids d'acide citrique et 0,05 à 0,08 parties en poids de ladite composition antioxydante.

On obtient ainsi une viande cuite dont on sépare, par exemple par égouttage, le jus de cuisson et la graisse qu'elle contient.
La viande cuite peut alors être totalement désossée et coupée en morceaux de petite taille.

Selon le présent procédé objet de l'invention, on prépare un mélange comprenant 7 à 15 parties en poids de sucre réducteur et 1 à 7 parties en poids d'au moins une substance contenant du soufre.
Le sucre réducteur est un monosaccharide et notamment un pentose tel que le xylose ou l'arabinose, ou un hexose tel que le glucose, ou un acide galacturonique ou un mélange de ces composés.
La substance contenant du soufre est la cystéine, la cystine, la méthionine ou la thiamine ou un mélange de ces substances.

Le mélange peut comprendre, en outre, 0 à 12 parties en poids de glutamate de sodium, 0 à 2 parties en poids d'inosine monophosphate et 0 à 1 partie en poids de matière grasse végétale.
Le mélange peut également comprendre 0 à 20 parties en poids de chlorure de sodium.
On ajoute de l'eau au mélange formé, de manière à obtenir un taux de matière sèche de 70-85% en poids.

Le mélange peut être travaillé, par exemple pendant 10 à 15 minutes avec un agitateur tournant à 100-120 tours par minute, afin de lui conférer une texture pâteuse homogène.

On fait réagir partiellement le mélange par traitement thermique, de préférence à une température comprise entre 93 et 99°C, pendant 40 à 240 minutes.

Le traitement thermique peut être effectué sous reflux, ce qui permet d'éviter l'évaporation de l'eau contenue dans le mélange.
Le mélange peut être travaillé, par exemple avec un agitateur tournant à 80-100 tours par minute pendant tout ou partie du traitement thermique, de manière à homogénéiser sa texture et à assurer des transferts de chaleur corrects, donc une réaction uniforme, dans toute sa masse.

Après le traitement thermique, on peut refroidir le mélange rapidement, de manière à stopper la réaction et à obtenir un mélange présentant une température de 60-70°C après 5-10 minutes.

On peut alors ajouter un sel tel que le chlorure de sodium au mélange traité thermiquement afin d'obtenir un mélange pâteux, plus facilement manipulable. On peut ajouter 0 à 2,5 parties en poids de sel pour 10 parties en poids de mélange traité, puis travailler le mélange salé à 60-70°C pendant 5-15 minutes de manière à obtenir un mélange homogène.
On ajoute le mélange ainsi formé à la viande cuite, coupée en petits morceaux, de préférence à raison de 1-3 parties en poids de mélange pour 10 parties en poids de viande cuite. On peut travailler la viande aromatisée obtenue avec un agitateur de manière à obtenir un produit homogène.
La viande aromatisée ainsi formée est alors séchée à 65-80°C, sous une pression de 10-30 mbar, et pendant 4 à 8 heures, jusqu'a un taux de matière sèche de 96-99% en poids.

La présente invention est illustrée plus en détail dans les exemples ci-après, dans lesquels les pourcentages et parties sont donnés en poids.

### Exemple 1

On prépare une composition antioxydante comprenant 132 g de propylène glycol, 40 g de butylhydroxyanisol, 20 g de gallate de propyle, 8 g d'acide citrique, 800 g de graisse de volaille et 9 kg de jus de viande concentré à 40% en poids de matière sèche.

On dispose dans un autoclave 100 kg de viande de boeuf désossée se présentant sous forme de morceaux de 25 kg chacun, 20 litres d'eau, 10 g d'acide citrique et 50 g de composition antioxydante.
On cuit la viande pendant 100 minutes, à une température d'environ 120°C, sous une pression de 1,7 bar.

Après cuisson, on sépare le jus et la graisse de la viande cuite, par égouttage.
On obtient 58,3 kg de viande cuite, qui est découpée en petits morceaux et réservée.

On prépare dans une cuve à double manteau un mélange comprenant 1,7 kg de glucose, 0,27 kg de cystéïne, 0,81 kg de xylose, 2,1 kg de chlorure de sodium, 1,8 kg de glutamate de sodium, 0,16 kg d'inosine monophosphate et 0,08 kg de matière grasse végétale, auquel on ajoute environ 1,5 litres d'eau de manière à obtenir un taux de matière sèche de 82 %.
On travaille le mélange pendant 10 minutes avec un agitateur tournant à 100 tours par minute puis, sans cesser l'agitation, on chauffe le mélange par envoi de vapeur dans le double manteau.
On laisse réagir le mélange à une température de 97-98°C pendant 1 heure.
On refroidit alors le mélange, par envoi d'eau froide dans le double manteau, jusqu'à une température d'environ 65°C.
On ajoute au mélange ainsi obtenu 1,5 kg de chlorure de sodium, on travaille le mélange salé pendant 10 minutes, à 65°C et l'on obtient 9,9 kg de mélange traité thermiquement à 85 % de teneur en matière sèche.

On prépare ensuite une viande aromatisée à sécher comprenant 50 kg de viande de boeuf cuite, 7,0 kg de mélange traité, 1,5 kg de blanc d'oeuf et 0,3 kg de composition antioxydante.

La viande est travaillée pendant 20 minutes avec un agitateur tournant à 50 tours par minute afin d'obtenir un produit homogène.

La viande aromatisée est ensuite séchée dans un four sous pression réduite, à environ 70°C, sous 15 mbar pendant 6 heures, jusqu'à un taux de matière sèche de environ 98% en poids et une activité de l'eau de 0,2.
La viande aromatisée séchée est alors moulue jusqu'à une taille des grains de environ 2 mm.

On obtient alors 26 kg de viande aromatisée déshydratée présentant un goût caractéristique de viande de boeuf.

### Exemple 2

On dispose dans un autoclave 150 kg de viande de volaille se présentant sous forme de poulets entiers pesant environ 1 kg chacun, 25 litres d'eau, 15 g d'acide citrique et 30 g de composition antioxydante telle que préparée à l'exemple 1.

On cuit la viande pendant 40 minutes, à une température d'environ 120°C, sous une pression de 1,7 bar.

Après cuisson, on sépare le jus et la graisse de la viande cuite, on désosse totalement la viande et on la coupe en petits morceaux.
On obtient 68,5 kg de viande désossée.

On prépare un mélange comprenant 1,6 kg de glucose, 1,3 kg de cystéine, 0,25 kg de xylose, 1,9 kg de chlorure de sodium, 1,6 kg de glutamate de sodium, 0,15 kg d'inosine monophosphate, 0,08 kg de matière grasse végétale et environ 1,5 litres d'eau, de manière à obtenir un mélange présentant un taux de matière sèche de 82 % en poids.

Le mélange est travaillé 10 minutes à 100 tours par minute, puis chauffé à 97-99°C tout en maintenant l'agitation.
On laisse le mélange réagir pendant 1 heure à cette température, puis on le refroidit jusqu'à 65°C.

On ajoute au mélange ainsi obtenu 1,5 kg de chlorure de sodium, on travaille le mélange salé pendant 10 minutes, à 65°C et l'on obtient 9,8 kg de mélange traité thermiquement à 85 % de teneur en matière sèche.

On prépare une viande aromatisée à sécher comprenant 50 kg de viande de volaille cuite et découpée, 7,0 kg de mélange traité, 0,5 kg de blanc d'oeuf et 0,3 kg de composition antioxydante.
On travaille la viande obtenue à 50 tours par minute pendant 20 minutes, puis on la sèche pendant 6 heures, à 70°C et sous une pression de 15 mbar de manière à atteindre un taux de matière sèche de 98% en poids, et une activité de l'eau de 0,2.

La viande aromatisée est ensuite moulue en granulés d'une taille d'environ 2 mm.
On obtient alors 25 kg de viande aromatisée déshydratée possédant un goût caractéristique de viande de volaille.

### Exemple 3

Les viandes aromatisées préparées selon les exemples 1 et 2 sont conservées à diverses températures pendant 24 mois. Au cours de cette période, des échantillons de viande aromatisée sont prélevés et reconstitués pour la consommation par trempage pendant 5 minutes dans un bouillon à 95-100°C.
Les échantillons reconstitués sont goûtés et leurs caractéristiques organoleptiques sont évaluées, en fonction de la température et du temps de stockage, selon un barème allant de 1 à 9, la note de 9 désignant une viande présentant de bonnes qualités organoleptiques et un goût de viande prononcé, et la note 5 la limite en dessous de laquelle la viande n'est organoleptiquement plus consommable.

Les résultats obtenus pour la viande de boeuf aromatisée préparée selon l'exemple 1 sont résumés dans le tableau 1, et pour la viande de volaille aromatisée préparée selon l'exemple 2 dans le tableau 2.

**TABLEAU 1**

| Température de stockage | | Temps de stockage (mois) | | | | | | | |
|---|---|---|---|---|---|---|---|---|---|
| | | 1 | 3 | 6 | 9 | 12 | 15 | 18 | 24 |
| Apparence et couleur | 4°C | 9 | 9 | 9 | 9 | 9 | 9 | 9 | 9 |
| | 20°C | 9 | 9 | 9 | 9 | 9 | 9 | 9 | 9 |
| | 25°C | 9 | 9 | 9 | 9 | 9 | 9 | 9 | 9 |
| | 30°C | 9 | 9 | 9 | 9 | 9 | 9 | 8,5 | 8 |
| Odeur | 4°C | 9 | 9 | 9 | 9 | 9 | 9 | 9 | 9 |
| | 20°C | 9 | 8,5 | 8,5 | 8,5 | 8,5 | 8 | 8 | 7,5 |
| | 25°C | 9 | 8,5 | 8,5 | 8 | 8 | 7,5 | 7,5 | 7 |
| | 30°C | 8,5 | 8 | 8 | 8 | 7 | 7 | 7 | 6 |
| Goût et qualité | 4°C | 9 | 9 | 9 | 9 | 9 | 9 | 9 | 9 |
| | 20°C | 9 | 8,5 | 8,5 | 8,5 | 8,5 | 8 | 8 | 7,5 |
| | 25°C | 8,5 | 8 | 8 | 8 | 8 | 7,5 | 7,5 | 6,5 |
| | 30°C | 8 | 7,5 | 7,5 | 7,5 | 7 | 7 | 7 | 5,5 |
| Consistance: la consistance reste constante, à une valeur de 9, quels que soient la température et le temps de stockage. | | | | | | | | | |

**TABLEAU 2**

| Température de stockage | | Temps de stockage (mois) | | | | | | | |
|---|---|---|---|---|---|---|---|---|---|
| | | 1 | 3 | 6 | 9 | 12 | 15 | 18 | 24 |
| Apparence et couleur | 4°C | 9 | 9 | 9 | 9 | 9 | 9 | 9 | 9 |
| | 20°C | 9 | 9 | 9 | 9 | 9 | 9 | 9 | 9 |
| | 25°C | 9 | 9 | 9 | 9 | 9 | 9 | 9 | 9 |
| | 30°C | 9 | 9 | 9 | 9 | 9 | 8 | 8 | 8 |
| Odeur | 4°C | 9 | 9 | 9 | 9 | 9 | 9 | 9 | 9 |
| | 20°C | 9 | 8,5 | 8,5 | 8,5 | 8 | 8 | 8 | 7,5 |
| | 25°C | 9 | 8,5 | 8 | 8 | 7,5 | 7 | 7 | 6,5 |
| | 30°C | 8,5 | 8 | 8 | 7,5 | 6,5 | 6 | 6 | 5,5 |
| Goût et qualité | 4°C | 9 | 9 | 9 | 9 | 9 | 9 | 9 | 9 |
| | 20°C | 9 | 8,5 | 8,5 | 8 | 7,5 | 7 | 7 | 6,5 |
| | 25°C | 8,5 | 8 | 8 | 7,5 | 7 | 6 | 6 | 5,5 |
| | 30°C | 8 | 7 | 7 | 6,5 | 5,5 | 5 | 5 | 4,5 |
| Consistance: la consistance reste constante, à une valeur de 9, quels que soient la température et le temps de stockage. | | | | | | | | | |

## Revendications

1. Procédé de préparation d'une viande aromatisée séchée, dans lequel on cuit une viande, on en sépare le jus et la graisse, on prépare un mélange comprenant, eh parties en poids, 7 à 15 parties de sucre réducteur et 1 à 7 parties d'au moins une substance contenant du soufre le sucre réducteur étant un monosaccharide, ou un acide galacturonique ou un mélange de ces composés, et la substance contenant du soufre étant la cystéine, la cystine, la méthionine ou la thiamine ou un mélange de ces substances on fait réagir partiellement le mélange par traitement thermique, on ajoute 1-3 parties de mélange traité thermiquement à 10 parties de viande cuite et l'on sèche la viande aromatisée obtenue à 65-80°C, sous une pression de 10 à 30 mbar, pendant 4 à 8 heures, jusqu'à un taux de matière sèche de 96-99% en poids.

2. Procédé selon la revendication 1, dans lequel on traite thermiquement le mélange à une température de 93 à 99°C pendant 40 à 240 minutes.

3. Procédé selon la revendication 1, dans lequel on ajoute au mélange avant traitement thermique 0 à 12 parties de glutamate de sodium et 0 à 20 parties de chlorure de sodium.

4. Procédé selon la revendication 1, dans lequel on ajoute 0 à 2,5 parties de chlorure de sodium à 10 parties de mélange traité thermiquement.

## Claims

1. Process for preparing a dried flavoured meat, wherein the meat is cooked, the juice and fat are separated therefrom, a mixture is prepared comprising, in parts by weight, 7 to 15 parts of reducing sugar and 1 to 7 parts of at least one sulfur-containing substance, the reducing sugar being a monosaccharide or a galacturonic acid or a mixture of these compounds, and the sulfur-containing substance being cysteine, cystine, methionine or thiamine or a mixture of these substances, the mixture is partly reacted by heat treatment, 1-3 parts of the heat-treated mixture are added to 10 parts of cooked meat and the flavoured meat obtained is dried at 65-80°C, under a pressure of 10 to 30 mbar for 4 to 8 hours, to a dry matter content of 96-99 % by weight.

2. Process according to claim 1, wherein the mixture is heat treated at a temperature of 93 to 99°C for 40 to 240 minutes.

3. Process according to claim 1, wherein 0 to 12 parts of sodium glutamate and 0 to 20 parts of sodium chloride are added to the mixture before heat treatment.

4. Process according to claim 1, wherein 0 to 2.5 parts of sodium chloride are added to 10 parts of the heat-treated mixture.

## Patentansprüche

1. Verfahren zur Herstellung von getrocknetem aromatiseiertem Fleisch, bei dem man Fleisch gart, von diesem den Saft und das Fett trennt, ein Gemisch herstellt, das in Gewichteteilen aus 7 bis 15 Teilen reduzierendem Zucker und 1 bis 7 Teilen wenigstens einer schwefelhaltigen Substanz besteht, wobei der reduzierende Zucker ein Monosaccharid oder eine Galakturonsäure oder ein Gemisch dieser Verbindungen ist und die schwefelhaltige Substanz Cystein, Cystin, Methionin oder Thiamin oder ein Gemisch dieser Substanzen ist, man das Gemisch durch Wärmebehandlung partiell reagieren lässt, 1 bis 3 Teile des wärmebehandelten Gemische 10 Teilen gegartem Fleisch beigibt und das erhaltene aromatisierte Fleisch 4 bis 8 h bei 65 bis 80°C unter einem Druck von 10 bis 30 mb bis zu einem Trockensubstanzgehalt von 96 bis 99 Gew.-% trocknet.

2. Verfahren nach Anspruch 1, bei dem das Gemisch 40 bis 240 min bei einer Temperatur von 93 bis 99°C wärmebehandelt wird.

3. Verfahren nach Anspruch 1, dadurch gekennzeichnet, dass dem Gemisch vor der Wärmebehandlung 0 bis 12 Teile Natriumglutamat und 0 bis 20 Teile Natriumchlorid beigegeben werden.

4. Verfahren nach Anspruch 1, bei dem 10 Teilen des wärmebehandelten Gemischs 0 bis 2,5 Teile Natriumchlorid beigegeben werden.
